Europäisches Patentamt

European Patent Office

Office européen des brevets

(11) Publication number: **0 458 982 A1**

# EUROPEAN PATENT APPLICATION
## published in accordance with Art. 158(3) EPC

(21) Application number: 91900372.3

(51) Int. Cl.⁵: **G05B 19/405**

(22) Date of filing: 11.12.90

(86) International application number:
PCT/JP90/01621

(87) International publication number:
WO 91/09355 (27.06.91 91/14)

(30) Priority: 18.12.89 JP 328036/89

(43) Date of publication of application:
04.12.91 Bulletin 91/49

(84) Designated Contracting States:
DE FR

(71) Applicant: FANUC LTD.
3580, Shibokusa Aza-Komanba, Oshino-mura
Minamitsuru-gun, Yamanashi 401-05(JP)

(72) Inventor: OTA, Yasuhiro Fanuc Dai-3
bira-karamatsu
3527-1, Shibokusa Oshinomura
Minamitsuru-gun Yamanashi 401-05(JP)

(74) Representative: Brunner, Michael John et al
GILL JENNINGS & EVERY 53-64 Chancery
Lane
London WC2A 1HN(GB)

(54) MACHINING DISPLAY SYSTEM.

(57) A machining display system for displaying a machining state in an interactive numerical controller for a four-spindle lathe. Machining steps of first and second tool rests are displayed on separate bar graphs (31, 32) in the transverse direction together with step numbers and rough machining and finish machining are displayed in different display methods. For example, a rough machining step is displayed in red (33, 37) and a finish machining step is displayed in blue (34, 38). Accordingly, rough machining and finish machining can be distinguished from each other easily.

```
                                                              ⌐30

  ┌─────────────────────────────────────────────────────────┐
  │              CONVERSATIONAL PROGRAM LIST                 │
  ├───────────────────────────┬─────────────────────────────┤
  │       TOOL  POST  I       │       TOOL POST  2          │
  ├───────────────────────────┼─────────────────────────────┤
  │ INITIAL SET               │ INITIAL SET                 │
  │ PROC.    (OI)     ROUGH    │ WAIT                        │
  │     END FACING             │                             │
  │     TOIOI                  │                             │
  │ PROC.    (O2)     ROUGH    │ PROC.    (O3)               │
  │  BAR        OUTER MID.     │    DRILLING                 │
  │     TOIOI                  │    TIOIO                    │
  │ WAIT                       │ PROC.    (O4)               │
  │                            │  BAR      INNER END         │
  │                            │    TO4O4                    │
  └───────────────────────────┴─────────────────────────────┘
```

CONVERSATIONAL PROGRAM LIST

TOOL POST I     TOOL POST 2

INITIAL SET

PROC. (OI) ROUGH   END FACING   TOIOI

PROC. (O2) ROUGH BAR OUTER MID.   TOIOI

WAIT

INITIAL SET

WAIT

PROC. (O3) DRILLING TIOIO

PROC. (O4) BAR INNER END TO4O4

36b
33
36a
31

32

(TRANS.)   (DELETE)   (WAIT)   (RETURN)   (GUIDE)

36d   35   36e   36f   38

37

36c
34

Fig. I

## TECHNICAL FIELD

The present invention relates to a machining display system, and more specifically, to a machining display system in an interactive type numerical control apparatus for 4-axes lathe.

## BACKGROUND ART

Conventionally, a program execution screen for performing an interactive type numerical control of a 4-axes lathe displays an execution time needed by each process for each tool, by using a bar graph, and the respective processes are each distinguished by a different color thereat, to thereby facilitate the process control of a machining job.

Since, however, the conventional machining display system of the interactive type numerical control apparatus for the 4-axes lathe does not distinguish a rough machining from a finish machining in each process, a problem arises in that whether each process being executed is a rough machining or finish machining cannot be easily determined only by observing the bar graph.

## DISCLOSURE OF THE INVENTION

Taking the above into consideration, an object of the present invention is to provide a display system using a bar graph wherein the displays of a rough machining and finish machining are distinguished from one another.

To solve the above problem, according to the present invention, there is provided a machining display system for displaying a machining state in an interactive type numerical control apparatus for 4-axes lathe, which comprises the steps of displaying the machining processes of a first tool post and the machining processes of a second tool post by using different horizontal bar graphs, together with the process numbers thereof, and displaying a rough machining and finish machining by using a different display mode for each.

In the machining display system in the interactive type numerical control apparatus for the 4-axes lathe, the respective processes executed by the first tool post and the second tool post are displayed by using different horizontal bar graphs, together with the process numbers thereof. In this case, the processes for the rough machining and finish machining are displayed in a different display mode; for example, the process for the rough machining is displayed in a red color, and the process for the finish machining is displayed in a blue color.

## BRIEF DESCRIPTION OF THE DRAWINGS

Figure 1 shows an interactive type program execution screen in an embodiment of the present invention; and

Figure 2 shows a general arrangement of hardware of a numerical control apparatus embodying the present invention.

## BEST MODE OF CARRYING OUT THE INVENTION

An embodiment of the present invention will be described below with reference to the drawings.

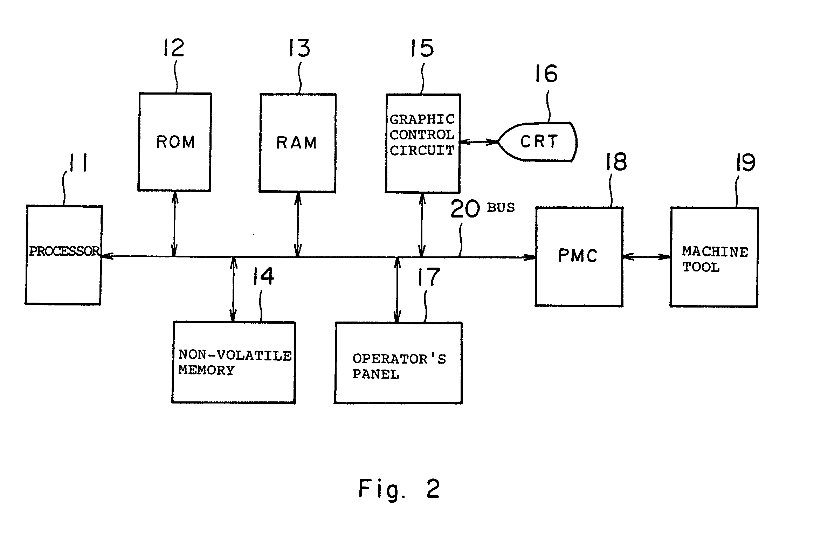

Figure 2 is a general arrangement of hardware of a numerical control apparatus embodying the present invention. A processor 11 controls the numerical control apparatus as a whole, in accordance with a system program stored in a ROM 12. The ROM 12 is an EPROM or EEPROM, and the RAM 13 is a SRAM, or the like, in which various data or I/O signals are stored. A non-volatile memory 14 is composed of a CMOS which stores amounts of parameters, pitch error corrections, tool corrections and the like, and these data are maintained even after a power supply to the numerical control apparatus is cut off, because the CMOS is supplied with power from a battery and is a non-volatile memory.

A graphic control circuit 15 converts digital signals into signals for display, and supplies those signals to a display 16. A CRT or liquid crystal display is used as the display 16, to display the position of each axis, the state of I/O signals, parameters and the like. An operator's panel 17 composed of a keyboard or the like is used to input various data or operate a machine tool 19.

A programmable machine controller (PMC) 18 receives an output signal through a bus 20, and processes the output signal by a sequence program to thus control the machine tool 19. Further, the programmable machine controller 18 receives an input signal from the machine tool, processes the input signal by using the sequence program, and transfers the input signal to the processor 11 through the bus 20.

The above components are interconnected through the bus 20.

Note that components such as axes control circuits, servo amplifiers, servo motors, and spindle amplifiers, spindle motors and the like are not shown in Figure 2. Further, a plurality of processors can be used, to provide a multi-processor system if required.

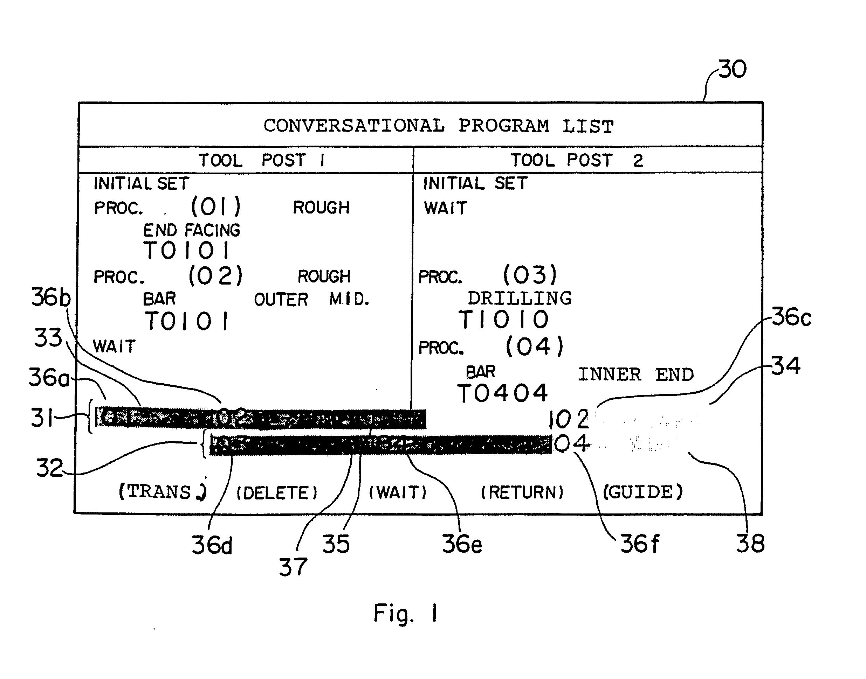

Figure 1 shows a program execution screen of an interactive type numerical control apparatus for 4-axes lathe in an embodiment of the present invention, wherein 30 designates the program execution screen displaying the outline of each process of each tool post, together with a display of the relationship between the times for executing each process of the each tool post, by using a bar graph. An upper bar graph 31 shows the relationship between the times for executing the respective processes of a tool post 1. A lower bar graph 32 shows the relationship between the times for executing the respective processes of a tool post 2. A bar graph 33 shows the time for executing the process of a rough machining, by arranging rectangular characters colored red, and a bar graph 34 shows the time for executing the process of a finish machining and is colored, for example, blue. A border line 35 is a vertical line distinguishing each process, and process numbers 36a to 36f show the order of the respective processes and are placed in front of the beginning of the bar graph of each process.

The upper bar graph 31 is composed of the bar graph 33 containing the process numbers 36a and 36b, a blank portion, and the bar graph 34 containing the process number 36c. This means that the tool post 1 will execute 01 and 02 processes for a rough machining, and thereafter, will executes a 02 process for a finish machining, after a predetermined delay.

The lower bar graph 32 is composed of a blank portion, a bar graph 37 containing the process numbers 36d and 36e, and a bar graph 38 containing a process number 36f. This means that the tool post 2 will execute 03 and 04 processes for a rough machining after a predetermined delay, and thereafter, will execute a 04 process for a finish machining.

Although the rough machining process is colored red and the finish machining process is colored blue, to distinguish the former from the latter in the above embodiment, they may of course be shown in any arbitrary color, and further when the display screen is a monochrome screen, the processes can be distinguished by differences in the shading of the color. Further, the process numbers can be more clearly displayed by using reversed characters.

As described above, according to the present invention, since a rough machining and finish machining are displayed on the program execution screen of an interactive type numerical control apparatus for a 4-axes lathe in different display modes, an advantage is gained in that the rough machining can be easily distinguished from the finish machining merely by observing the bar graphs displayed on the program execution screen.

Further, since the bar graph is composed of characters, a display thereof can be made without difficulty.

## Claims

1. A machining display system for displaying a machining state in an interactive type numerical control apparatus for 4-axes lathe, comprising the steps of:

   displaying the machining processes of a first tool post and the machining processes of a second tool post by using different horizontal bar graphs together with the process numbers thereof; and

   displaying a rough machining and finish machining in different display modes.

2. A machining display system according to claim 1, wherein when a display unit is a color display unit and said rough machining and said finish machining are each displayed in a different color, respectively.

3. A machining display system according to claim 1, wherein when a display unit is a monochrome display unit and said rough machining and said finish machining are displayed by differences in the shading of the color.

4. A machining display system according to claim 1, wherein said bar graph is composed of characters.

CONVERSATIONAL PROGRAM LIST

| TOOL POST 1 | TOOL POST 2 |
|---|---|
| INITIAL SET | INITIAL SET |
| | WAIT |
| PROC. (O1) | |
| END FACING | |
| T O I O I | |
| PROC. (O2) | PROC. (O3) |
| ROUGH | DRILLING |
| OUTER MID. | T I O I O |
| BAR | PROC. (O4) |
| T O I O I | BAR |
| WAIT | T O 4 O 4 |
| | INNER END |

30

36c
34
38
36f
36e
35
37
36d
36b
33
36a
31
32

(DELETE) (WAIT) (RETURN) (GUIDE)
(TRANS)

Fig. 1

Fig. 2

EP 0 458 982 A1

# INTERNATIONAL SEARCH REPORT

International Application No PCT/JP90/01621

**I. CLASSIFICATION OF SUBJECT MATTER** (if several classification symbols apply, indicate all) ⁶

According to International Patent Classification (IPC) or to both National Classification and IPC

Int. Cl⁵  G05B19/405

**II. FIELDS SEARCHED**

Minimum Documentation Searched ⁷

| Classification System | Classification Symbols |
|---|---|
| IPC | G05B19/405 |

Documentation Searched other than Minimum Documentation
to the Extent that such Documents are Included in the Fields Searched ⁸

| | |
|---|---|
| Jitsuyo Shinan Koho | 1932 – 1991 |
| Kokai Jitsuyo Shinan Koho | 1971 – 1991 |

**III. DOCUMENTS CONSIDERED TO BE RELEVANT** ⁹

| Category * | Citation of Document, ¹¹ with indication, where appropriate, of the relevant passages ¹² | Relevant to Claim No. ¹³ |
|---|---|---|
| Y | JP, A, 62-199343 (Fanuc Ltd.), September 3, 1987 (03. 09. 87) & US, A, 4853867 | 1-4 |
| Y | JP, A, 61-221905 (Okuma Machinery Works, Ltd.), October 2, 1986 (02. 10. 86), (Family: none) | 1-4 |
| Y | JP, A, 1-228759 (Fanuc Ltd.), September 12, 1989 (12. 09. 89), (Family: none) | 1-4 |

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| February 27, 1991 (27. 02. 91) | March 18, 1991 (18. 03. 91) |

| International Searching Authority | Signature of Authorized Officer |
|---|---|
| Japanese Patent Office | |

Form PCT/ISA/210 (second sheet) (January 1985)